(19) Europäisches Patentamt
European Patent Office
Office européen des brevets

(11) **EP 2 740 592 A2**

(12) **EUROPÄISCHE PATENTANMELDUNG**

(43) Veröffentlichungstag:
**11.06.2014  Patentblatt 2014/24**

(21) Anmeldenummer: **13196518.8**

(22) Anmeldetag: **10.12.2013**

(51) Int Cl.:
*B32B 7/12* (2006.01)   *B32B 27/08* (2006.01)
*B32B 27/12* (2006.01)   *B32B 27/30* (2006.01)
*B32B 27/32* (2006.01)   *B32B 27/34* (2006.01)
*B32B 1/08* (2006.01)   *F16L 55/165* (2006.01)
*E03F 3/06* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.12.2012   DE 102012112024**
**11.01.2013   DE 102013100272**

(71) Anmelder: **Buergofol GmbH**
**93354 Siegenburg (DE)**

(72) Erfinder:
• **Stark, Kurt**
**91284 Neuhaus a.d. Pegnitz (DE)**
• **Schleicher, Gregor**
**85049 Ingolstadt (DE)**
• **Boutrid, Abdel-Kader**
**93345 Siegenburg (DE)**

(74) Vertreter: **Schlief, Thomas P.**
**Patentanwälte**
**Canzler & Bergmeier**
**Friedrich-Ebert-Straße 84**
**85055 Ingolstadt (DE)**

(54) **Mehrschichtige Folie**

(57)    Die Erfindung betrifft eine mehrschichtige Folie, insbesondere in Form einer Schlauchfolie zur Verwendung als Preliner bei der grabenlosen Kanalsanierung mittels Schlauchlining-Verfahren. Die erfindungsgemäße mehrschichtige Folie ist gekennzeichnet durch mindestens eine Schicht (a), welche mindestens ein Homo- oder Copolyamid mit einem prozentualen Gewichtsanteil von mehr als 25 Gew.-% enthält, vorzugsweise als Außenschicht, sowie durch mindestens eine Schicht (b) enthaltend mindestens ein thermoplastisches, gegebenenfalls modifiziertes, Olefin-Homo- oder Copolymer und/oder durch mindestens eine Schicht (c) enthaltend mindestens ein thermoplastisches Elastomer (TPE). Auch werden verschiedene Verwendungen der erfindungsgemäßen mehrschichtigen Folie vorgeschlagen.

EP 2 740 592 A2

**Beschreibung**

Die Erfindung betrifft eine mehrschichtige Folie. Ein besonderer Schwerpunkt liegt hierbei auf einer mehrschichtigen Folie in Form einer Schlauchfolie zur Verwendung als Preliner bei der grabenlosen Kanalsanierung mittels Schlauchlining-Verfahren.

Die Anwendungsbereiche von Folien erweitern sich ständig. Zu den Einsatzgebieten, bei denen beispielsweise Folien mit Olefin-Homo- oder Copolymeren verwendet werden, gehört auch das Schlauchlining-Verfahren für die grabenlose Kanalrohrsanierung. Hierbei weist ein Schlauchliner (auch Einlegeschlauch oder nur Liner genannt) beim System Glasfaser-Schlauchliner mit UV- oder Dampfhärtung üblicherweise einen inneren und einen äußeren Schlauch auf, zwischen denen das Glasfaser-Trägermaterial eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (EpoxidHarze) zum Einsatz. Die Härtung der Harze erfolgt bei UP- oder VE-Harzen zum Beispiel mit Hilfe von Photoinitiatoren. Die Härtung kann aber auch thermisch erfolgen.

Der Einlegeschlauch bzw. Schlauchliner wird im Rohr bis zum Anliegen an eine Außenwand aufgeblasen, um anschließend das Harz - beispielsweise mittels UV-Licht aus einer langsam durch das Rohr gezogenen UV-Licht-quelle - auszuhärten. Zum Schluss wird die innere Folie des Einlegeschlauchs abgezogen und entfernt. Die Schicht mit dem Trägermaterial ist dann den durch das Rohr zu leitenden Substanzen exponiert.

Häufig wird der Schlauchliner - insbesondere beim System Synthesefaser-Schlauchliner mit Warmwasser- oder Dampfhärtung - nicht in direkten Kontakt mit der Rohrinnenwand gebracht. Vielmehr wird in das zu sanierende Rohr ein Preliner (auch Preliner-Folie genannt), d.h. eine dickwandige, das Rohr vollständig auskleidende Folie, bekanntermaßen aus PE mit einer hohen Dichte (HDPE - High Density Polyethylene), eingebracht, welcher an der Innenwand des Rohres angelegt wird. Anschließend wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpfropfen und Verstopfungen bilden können.

Auch kann ein Preliner beim Einzugsverfahren eine ähnliche Funktion wie bekannte Gleitfolien für den einzuziehenden Schlauchliner haben. In diesem Fall kommt es auf niedrige Reibungskoeffizienten zwischen der Gleitfolie und der Außenfolie des Schlauchliners an. Hierdurch wird der Einlegeschlauch bzw. Schlauchliner beim Einziehen in das Rohr nicht durch die Rohrinnenwand bzw. Gegenstände im Rohr beschädigt, andererseits ist die Reibung zwischen Schlauchliner und Gleitfolie sehr niedrig und erleichtert ein Einziehen des Schlauchliners.

Eine bekanntermaßen häufig eingesetzte Preliner-Folie ist unter dem Markennamen Valeron® bekannt. Die sehr große mechanische Stabilität dieser Folie entsteht durch die Querverbindung von zwei gereckten, senkrecht zueinander verlaufenden HDPE-Schichten. Durch das Recken verliert die Folie ihre Dehnfähigkeit, wodurch sie ihre bessere Reißfestigkeit erhält. Die beiden quer verlaufenden Schichten sorgen dafür, dass die Folie in allen Richtungen gleich widerstandsfähig und insbesondere sehr reiß- und durchstoßfest ist. Zudem breitet sich ein Loch oder ein einmal entstandener Riss aufgrund des Schichtaufbaus nicht weiter aus, da die verringerte Foliendehnung auch eine hohe Durchstoßfestigkeit bedingt.

Nachteilig bei der genannten, als Preliner häufig verwendeten Valeron-HDPE-Folie ist unter anderem, dass sie aufgrund ihrer sehr hohen Eigensteifigkeit nicht ohne Probleme im Rahmen des Inversionsverfahrens umgestülpt werden kann. Zudem ist die Valeron-Folie herstellungsbedingt nicht in Schlauchform erhältlich, so dass sie gesiegelt werden muss. Da aber die Schichten der Folie orientiert und gereckt sind, ist die Siegelfähigkeit der Folie stark eingeschränkt. Aus diesem Grund benötigt man zur Siegelung der Valeron-Folie einen unerwünschten thermisch aktivierbaren Kleber (z. B. Hotmelt). Dabei überlappt die Folie an der zu siegelnden Fläche ca. 3 bis 5 cm, so dass sich die Naht bzw. die Überlappung der Folie an dieser Stelle bei der Inversion sehr störend auswirkt. Nachteilig ist bei einer derartigen Siegelung zudem nicht nur der weitere, mit Kosten verbundene Produktionsschritt, sondern insbesondere die Gefahr, dass die Siegelnaht undicht ist. Daher kann bei unvollständiger Siegelung von außen Wasser durch die Preliner-Folie eindringen, wodurch die Härtung des Harzes sehr beeinträchtigt wird. Ein weiterer Nachteil der Valeron-Folie ist ihre hohe Affinität zu den verwendeten Harzen, die sich in einer deutlichen Harzhaftung äußert. Dadurch wird das Inversieren des Schlauchliners, zum Beispiel beim System Synthesefaser-Schlauchliner, bei dem die mit Harz getränkte Seite zum Preliner kommt, sehr erschwert. Schließlich besitzt die Valeron-Folie praktisch keine Barrierewirkung gegen die beim Harz verwendeten Monomere und Öle. Somit kann eine Migration von schädlichen Stoffen in das Grundwasser nicht vermieden werden.

Es ist Aufgabe der vorliegenden Erfindung, eine Folie zur Verfügung zu stellen, welche hohen Anforderungen hinsichtlich ihrer mechanischen Stabilität bei gleichzeitig hoher Flexibilität genügt. Zudem soll es möglich sein, eine solche Folie ohne Naht zur Verfügung zu stellen, vorzugsweise in einer Schlauchform, damit eine Sollbruchstelle in Form einer Naht vermieden werden kann. Dabei ist die Affinität der Folie, insbesondere wenn sie als Preliner verwendet wird, zu den verwendeten Harzen und insbesondere deren Harzhaftung weitestgehend einzuschränken. Überdies soll eine Folie zur Verfügung gestellt werden, die eine hohe Barrierewirkung gegen Monomere und Öle aufweist.

Diese Aufgabe wird durch die Folie gemäß Anspruch 1 gelöst. Die erfindungsgemäße Folie weist mindestens eine - vorzugsweise eine der Außenschichten der Folie bildende - Schicht (a) auf, die mindestens ein Homo- oder Copolyamid (Abkürzung im Folgenden: PA) mit einem prozentualen Gewichtsanteil von mehr als 25 Gew.-% enthält. Zudem weist die erfindungsgemäße Folie entweder mindestens eine Schicht (b) auf, die mindestens ein thermoplastisches, gegebenenfalls modifiziertes, Olefin-Homo- oder Copolymer enthält, und/oder sie weist mindestens eine Schicht (c) aus, die mindestens ein thermoplastisches Elastomer enthält.

Die Vorteile der Erfindung sind insbesondere darin zu sehen, dass erfindungsgemäße Folien gute mechanische Eigenschaften wie Robustheit, Widerstandsfähigkeit, Durchstoßfestigkeit bei relativ geringer Eigensteifigkeit aufweisen. Auch können erfindungsgemäße nicht-gesiegelte Schlauchfolien realisiert werden, die sich beispielsweise während der grabenlosen Kanalsanierung beim Inversionsverfahren sehr gut umstülpen lassen sowie eine sehr hohe Dichtigkeit gegenüber Wassereintritt bzw. Monomeraustritt aus dem Harz eines Einlegeschlauchs bzw. Schlauchliners aufweisen. Die erfindungsgemäßen Folien verfügen insgesamt über eine hervorragende Barriere gegenüber Monomeren und Ölen. Zudem ist die Haftung zum Harz deutlich eingeschränkt.

Unter dem Begriff "Schlauchfolie" wird im Sinne dieser Erfindung eine durch (Co)-Extrusion, vorzugsweise durch Blasfolien-(Co)-Extrusion, hergestellte Mehrschichtfolie verstanden, die keine Siegelnaht aufweist.

Die erfindungsgemäße Mehrschichtfolie enthält wenigstens eine Polyamid-Schicht mit mehr als 25 Gew.-%. Dies kann ein Homo- und/oder Copolyamid sein oder Mischungen unterschiedlicher Polyamide.

Geeignete Homo- oder Copolyamide sind vorzugsweise ausgewählt aus der Gruppe thermoplastische aliphatische, teilaromatische oder aromatische Homo- oder Copolyamide. Diese Homo- oder Copolyamide können aus Diaminen, wie aliphatischen Diaminen mit 2-20 Kohlenstoffatomen, insbesondere Hexamethylendiamin und/oder aromatischen Diaminen mit 6-10 Kohlenstoffatomen, insbesondere p-Phenylendiamin, und aus aliphatischen oder aromatischen Dicarbonsäuren mit 6-20 Kohlenstoffatomen, wie z.B. Adipinsäure, Terephthalsäure oder Isoterephthalsäure, hergestellt werden. Weiterhin können Homo- oder Copolyamide aus Lactamen mit 4-20 Kohlenstoffatomen, wie z.B. aus $\varepsilon$-Caprolactam, hergestellt werden. Erfindungsgemäß zum Einsatz kommende Polyamide sind vorzugsweise PA 6, PA 666, PA 12, PA 11, PA 66, PA 610, PA 612, PA 6I, PA 6T oder entsprechende Copolymere oder Mischungen aus wenigstens zwei der genannten Polyamide.

Vorzugsweise enthält die mindestens eine Schicht (a) der erfindungsgemäßen Folie mehr als 50 Gew.-%, vorzugsweise mehr als 75 Gew.-%, bevorzugt mehr als 95% Gew.-% und ganz besonders bevorzugt im Wesentlichen bzw. ca. (d.h. nahezu oder vollständig) 100 Gew.-% Homo- oder Copolyamid.

Weist die erfindungsgemäße Folie mindestens eine Schicht (b) aus, so enthält diese Schicht (b) vorzugsweise mehr als 20 Gew.-%, besonders bevorzugt mehr als 40 Gew.-% und bis zu 100 Gew.-% thermoplastisches Olefin-Homo- oder Copolymer.

Olefin-Homo- oder Copolymere im Sinne der vorliegenden Erfindung sind thermoplastische Polymere von $\alpha,\beta$-ungesättigten Olefinen mit zwei bis sechs Kohlenstoffatomen, wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm$^3$ aufweist und sich durch einen hohen Verzweigungsgrad der Moleküle auszeichnet. Mit "HDPE" wird Polyethylen hoher Dichte bezeichnet, welches nur eine geringe Verzweigung der Molekülketten aufweist, wobei die Dichte im Bereich zwischen 0,94-0,97 g/cm$^3$ liegen kann.

Das Olefin-Homo- oder Copolymer ist bevorzugt Polyethylen (PE). Dieses wird vorzugsweise in Form von High Density Polyethylen (HDPE) verwendet. Auch LDPE und/oder LLDPE (Linear Low Density Polyethylene) sind mit Vorteil einsetzbar. Ferner eignen sich Polyolefine, insbesondere Polyethylene, die auf Basis von Metallocen-Katalysatoren polymerisiert wurden (mPE), wie mLDPE (metallocen LDPE) und mLLDPE (metallocen LLDPE). Polyethylen ist in unterschiedliche Kategorien klassiert, hauptsächlich in Bezug auf ihre Dichte und Verzweigung. Seine mechanischen Eigenschaften hängen in bedeutendem Maße von Variablen wie der Länge und der Art der Verzweigung, der Kristallstruktur und dem Molekulargewicht ab. Die meistverkauften Polyethylene sind HDPE, LLDPE und LDPE. Im Speziellen sieht die Reihenfolge wie folgt aus (englische Schreibweise der Polymere):

- o Ultra-high Molecular Weight Polyethylene (UHMWPE)
- o Ultra Low Molecular Weight Polyethylene (ULMWPE oder PE-WAX)
- o High Molecular Weight Polyethylene (HMWPE)
- o High Density Polyethylene (HDPE)
- o High Density Cross-linked Polyethylene (HDXLPE)
- o Cross-linked Polyethylene (PEX or XLPE)
- o Medium-density Polyethylene (MDPE)
- o Linear Low Density Polyethylene (LLDPE)

o Low Density Polyethylene (LDPE)
o Very Low Density Polyethylene (VLDPE)
o Chlorinated Polyethylene (CPE)

VLDPE (Very Low Density Polyethylene) ist durch einen Dichtebereich von 0,880 - 0,915 g/cm$^3$ definiert. Es ist im Wesentlichen ein lineares Polymer mit einem hohen Anteil an kurzen Seitenketten, üblicherweise hergestellt durch lineare Copolymerisation von Ethylen mit kurzkettigen Alpha-Olefinen (z.B. 1-Buten, 1-Hexen, und 1-Okten). VLDPE wird sehr häufig unter Verwendung von Metallocen-Katalysatoren hergestellt, weil durch diese Katalysatoren mehr Co-Monomere eingebaut werden können.

Gemäß einer anderen vorteilhaften Alternative findet als Olefin-Homo- oder Copolymer Polypropylen (PP) Verwendung.

Mischungen von verschiedenen, einschließlich der oben aufgezählten, Olefin-Homo- oder Copolymeren in der besagten mindestens einen Schicht (b) sind ohne Weiteres möglich.

Weist die erfindungsgemäße Folie mindestens eine Schicht (c) auf, so enthält diese mindestens eine Schicht (c) vorzugsweise mehr als 20 Gew.-%, besonders bevorzugt mehr als 40 Gew.-% und bis zu 100 Gew.-% thermoplastisches Elastomer (TPE).

Weist die erfindungsgemäße Folie mindestens eine Schicht (c) auf, so enthält diese mindestens eine Schicht (c) als thermoplastisches Elastomer (TPE) gemäß einer bevorzugten Ausführungsform thermoplastisches Polyurethan (TPU), also ein thermoplastisches Elastomer auf Urethanbasis (auch als TPE-U bezeichnet). Beispiele hierfür sind Desmopan, Texin und Utechllan von Bayer. Weitere Beispiele sind die Produkte, die unter den Handelsnamen Elastollan, Estane, Morthane, Pellethane, Pearlthane, Skythane oder Tecoflex erhältlich sind.

Mit Vorteil können auch andere TPE-Substanzen eingesetzt werden, wobei - neben TPU bzw. TPE-U - folgende Gruppen unterschieden werden:

- TPE-O oder TPO = Thermoplastische Elastomere auf <u>Olefinbasis,</u> vorwiegend PP/EPDM, z. B. Santoprene von AES/Monsanto;
- TPE-V oder TPV = Vernetzte thermoplastische Elastomere auf <u>Olefinbasis,</u> vorwiegend PP/EPDM, z. B. Sarlink von Teknor Apex, Forprene von SoFter;
- TPE-E oder TPC = Thermoplastische Polyesterelastomere / Thermoplastische Copolyester, z. B. Hytrel von <u>DuPont</u> oder Riteflex von <u>Ticona;</u>
- TPE-S oder TPS = Styrol-Blockcopolymere (SBS, SEBS, SEPS, SEEPS und MBS), z. B. Styroflex von BASF, Septon von <u>Kuraray</u> oder Thermolast von <u>Kraiburg TPE;</u>
- TPE-A oder TPA = Thermoplastische Copolyamide, z. B. PEBAX von Arkema.

Auch ist TPE-Silikon verwendbar, das beispielsweise von Wacker unter dem Handelsnamen Geniomer erhältlich ist. Geniomer® ist ein Copolymer aus Polydimethylsiloxan und Harnstoff und verbindet die guten Verarbeitungseigenschaften eines organischen Thermoplasts mit einigen typischen Siliconeigenschaften. Geniomer® weist somit ein Eigenschaftsprofil auf, das in dieser Form bislang weder bei Thermoplasten noch bei Siliconen realisierbar war.

Die TPE-Schicht gemäß Anspruch 1 kann insbesondere aufgebaut sein, wie jede der in der EP 1 145 847 A1 beschriebenen drei Schichten (1), (2) und (3).

Vorzugsweise weist die erfindungsgemäße Folie mindestens eine weitere als Haftvermittlerschicht (d) ausgebildete Schicht auf (Abkürzung: HV). Diese Haftvermittlerschicht (d) kann -je nach Vorhandensein der verschiedenen Schichten und je nach Ausführungsbeispiel - zwischen zwei Schichten (a), zwischen einer Schicht (a) und einer Schicht (b), zwischen zwei Schichten (b), zwischen einer Schicht (a) und einer Schicht (c), zwischen einer Schicht (b) und einer Schicht (c), oder zwischen zwei Schichten (c) angeordnet sein.

Zur Herstellung der genannten Haftvermittlerschicht(en) können übliche Haftvermittler eingesetzt werden. Vorzugsweise basiert/basieren die Haftvermittlerschicht(en) jeweils unabhängig voneinander auf wenigstens einem modifizierten thermoplastischen Polymer, vorzugsweise auf wenigstens einem modifizierten Olefin-Homo- oder Copolymer. Als Olefin-Homo- oder Copolymere können dabei dieselben Olefin-Homo- oder Copolymere eingesetzt werden, die oben bereits genannt wurden, nur dass diese modifiziert sind. Besonders bevorzugt basiert/basieren die Haftvermittlerschicht(en) jeweils unabhängig voneinander auf wenigstens einem modifizierten Ethylen-Homo- oder Copolymer und/oder wenigstens einem modifizierten Propylen-Homo- oder Copolymer, welches mit wenigstens einer organischen Säure oder wenigstens einem vorzugsweise zyklischen organischen Säureanhydrid, vorzugsweise mit Maleinsäureanhydrid, modifiziert ist. Auch Ethylen-Vinylacetat-, Ethylen-Vinylalkohol- (EVOH) und Ethylen-(Meth)acrylat-Copolymere, in ihrer modifizierten oder nicht modifizierten Form, eignen sich bestens als Haftvermittler.

Die Haftvermittlerschicht(en) der erfindungsgemäßen Mehrschichtfolie weist/weisen vorzugsweise jeweils unabhängig voneinander eine Schichtdicke von 1 μm bis 30 μm, besonders bevorzugt von 2 μm bis 20 μm, auf.

Vorteilhafte Schichtaufbauten sind 3- oder 5-schichtig oder weisen noch mehr Schichten auf. Beispielhafte Schichtfolgen sind PE/HV/PA oder PE/HV/PA/HV/PE oder PE/HV/PA/HV/PA.

Bei einer vorteilhaften Ausführungsform der erfindungsgemäßen Folie sind beide Außenschichten als Schicht (a) ausgebildet, wobei diese beiden Außenschichten demnach jeweils mindestens ein Homo- oder Copolyamid mit einem prozentualen Gewichtsanteil von mehr als 25 Gew.-% enthalten. Besonders bevorzugt sind_Polymere in der Folie durch Bestrahlung mit Beta- oder Gammastrahlen vernetzt. Eine Strahlenvernetzung kann typisch eingesetzten Kunststoffen die mechanischen, thermischen und chemischen Eigenschaften von Hochleistungskunststoffen verleihen. Die hierbei eingesetzten Beta- oder Gammastrahlen lösen vernetzende Reaktionen in den Polymeren aus. Die Vernetzung ist möglich bei Olefin-Homo- oder Copolymeren, Homo- oder Copolyamiden und auch bei thermoplastischen Elastomeren. Die Strahlenvernetzung ist einfach, kostengünstig und flexibel. Die Beschleunigungsspannung kann zwischen 25 und 25 kV liegen, während die Intensität zwischen 5 und 500 kGy betragen kann. Die Eindringtiefe liegt bei mindestens 1 $\mu$m, wobei auch Folien und Folienverbunde in ihrer gesamten Dicke durchdrungen werden können.

Eine Strahlenvernetzung kann hierbei zwischen Polymeren innerhalb einer Schicht und/oder zwischen Polymeren zweier angrenzenden Schichten, was zu einem stärkeren Verbund zwischen diesen Schichten führt, realisiert werden.

Die an sich bekannte Technik zur Vernetzung von Folien mittels Elektronenbestrahlung ($\beta^-$-Strahlung) ist beispielsweise im Artikel "Electron Beam Technology for Converting Applications" von Stephen C. Lapin, Radtech Report; 23, 5; S. 44-47; 2009 beschrieben. Auch unter *www.bgs.eu/strahlenvernetzung.html* der Firma BGS Beta-Gamma-Service GmbH & Co. KG und *www.ebeam.com/markets.php?.section=cross* der Firma Energy Sciences Inc., Wilmington, MA, USA, sind diverse Informationen zur Strahlenvernetzung aufgeführt. Der Inhalt dieser Dokumente wird explizit in die vorliegende Offenbarung miteinbezogen.

Die erfindungsgemäße Folie weist gemäß einer vorteilhaften Ausführungsform eine Dicke von 20 bis 2000 $\mu$m auf, vorzugsweise von 40 bis 1000 $\mu$m, besonders bevorzugt von 60 bis 400 $\mu$m und insbesondere von 80 bis 250 $\mu$m auf.

Gemäß einer bevorzugten Ausführungsform enthält die mindestens eine ein Olefin-Homo- oder Copolymer enthaltende Schicht (b) der erfindungsgemäßen Folie und/oder eine als Haftvermittlerschicht vorgesehene Schicht (d) mindestens ein Ethylen-(Meth)Acrylat-Copolymer in funktionalisierter oder nicht-funktionalisierter Form. Der prozentuale Gewichtsanteil des mindestens einen Ethylen-(Meth)Acrylat-Copolymers liegt hierbei vorzugsweise im Bereich von 0,1 bis 100% und bevorzugt bei mindestens 30 Gew.-%. Hierdurch kann eine noch bessere Dehnbarkeit bis zum Folienspleiß bzw. bis zum Platzen der Folie erreicht werden.

Vorzugsweise enthält die erfindungsgemäße Folie -je nach Anwendungsfall - einen oder mehrere der folgenden Stoffe in mindestens einer der Folienschichten: Polystyrol (PS); Polyhalogenide, wie z.B. PVC und/oder Polyvinylidenchlorid (PVdC); Ethylenvinylalkohol-Copolymer (EVOH), Polyvinylalkohol (PVOH oder PVAL), Haftvermittler, Ethylenvinylacetat (EVAc); ein oder mehrere Ionomere, ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

Zur Verbesserung der Folieneigenschaften können folgende Stoffe bzw. Additive im Zuge der Extrusion in einer oder in mehreren Schichten eingesetzt werden. Als Additive werden zum Beispiel Haftvermittler, funktionalisierte Polymere wie z.B. EVOH, optische Aufheller, thermische Stabilisatoren, Gleitmittel, Antioxidantien, Oxygen scavenger, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher zugesetzt.

Die erfindungsgemäßen Folien lassen sich auf unterschiedliche Weise herstellen. Eine bevorzugte Herstellung wird mittels Extrusion bzw. Coextrusion realisiert, beispielsweise durch Blasextrusion oder Cast-Extrusion. Am meisten bevorzugt ist die Herstellung als schlauchförmige Blasfolie.

Vorzugsweise ist die erfindungsgemäße Folie nicht orientiert. Weiterhin ist sie bevorzugt siegelfähig, obwohl sie bevorzugt - als Schlauchfolie - keine Siegelnaht aufweist.

Die erfindungsgemäße Folie in Form einer Schlauchfolie ohne Siegelnaht wird vorteilhafterweise bei der Rohrsanierung mittels Schlauchlining-Technik eingesetzt und hierbei besonders bevorzugt als sog. Preliner, der in das zu sanierende, unterirdisch verlegte Rohr, vorzugsweise ein Kanalrohr, eingezogen oder invertiert (umgestülpt) wird und dann an der Innenwand dieses Rohres anliegt. Anschließend wird ein Schlauchliner mit einem aushärtbaren Trägermaterial gleitend durch den im Rohr verlegten Preliner gezogen. Alternativ wird der Schlauchliner in dem Preliner invertiert. Die hervorragende mechanische Robustheit gepaart mit einer hohen Flexibilität bzw. Dehnbarkeit, einer sehr hohen Barriere gegen Monomere und Öle, einer geringen Harzhaftung und einer großen Wasserfestigkeit dank siegelnahtloser Ausführung als Schlauchfolie, verleihen der erfindungsgemäßen Folie große Vorteile gegenüber den bekannten bisher als Preliner verwendeten LDPE- oder HDPE-Folien, wie beispielsweise der genannten Valeron-Folie.

Die erfindungsgemäße Folie kommt zudem bei allen Varianten für die grabenlose Kanalsanierung in Frage, d.h. mit Vorteil auch als Gleitfolie, Stütz- oder Kalibrierschlauch oder als - vorzugsweise mittels Strahlenvernetzung vorbehandelte - Schlauchinnenfolie eines Schlauchliners. Ein Stützschlauch bzw. Stützrohr wird zum Zwecke der Überbrückung verwendet, wenn die Inversionstrommel nicht unmittelbar vor die zu sanierende Öffnung des Rohres platziert werden kann. Auf diese Weise liegt der Schlauchliner an keiner Stelle frei. Diese Notwendigkeit kann auch am Haltungsende erforderlich sein, um den austretenden Liner zu stützen. Der Stützschlauch ersetzt damit den außenliegenden Kanal und bietet an den freien Stellen einen entsprechenden Gegendruck für den Schlauchliner.

Ein Kalibrierschlauch entspricht in seiner Funktion im Wesentlichen der Schlauchinnenfolie beim System UV-/Licht-härtender Glasfaserliner und ist bei einem Schlauchliner auch ebenso angeordnet wie die Schlauchinnenfolie. Oft ist ein Kalibrierschlauch an seiner Schlauchaußenseite (also beim Einsatz hin zur Kanalwand) mit einem Vlies oder Filz verbunden. Wenn ein Kalibrierschlauch verwendet wird, kann auf eine Schlauchinnenfolie verzichtet werden. Hierbei kann beim Einsatz der erfindungsgemäßen Folie als Kalibrierschlauch auch auf beiden Seiten Harz aufgetragen sein. Vorzugsweise wird das Harz in Form eines mit Harz getränkten Trägers, beispielsweise Glasfasern oder Synthesefaserfilze, mit der Folie in Kontakt gebracht. Die aktivierbare(n) Schicht(en) der erfindungsgemäßen Folie verbindet (verbinden) sich dann mit dem Harz oder mit einem harzgetränkten Trägermaterial (wie Vlies, Filz, oder Textil etc.). Erhalten wird somit ein "Rohr-im-Rohr"-System. Die Abfolge bei Verwendung eines Kalibrierschlauchs ist dann zum Beispiel wie folgt: Außen Kanalwand, bei Bedarf Preliner-Folie, dann außenliegende Folie des Schlauchliners oder Beschichtung, dann Synthesefasern mit Harz (Träger, bilden das äußere Rohr), dann Synthesefasern mit ggf. Harz plus Beschichtung oder Folie (bilden den Kalibrierschlauch als inneres Rohr). Durch Füllung des Kalibrierschlauchs von innen mit Wasser, Druckluft etc. wird der den Träger aufweisende Synthesefilzliner im zu sanierenden Rohr aufgestellt.

Eine zusätzlich eingebaute Gleitfolie wird häufig verwendet, um den GFK-Schlauchliner vor Beschädigungen während des Einbringens zu schützen und die Reibungskräfte zu minimieren.

Die möglichen Einsatztechniken bei den genannten Einbringverfahren sind sowohl das Inversieren des Schlauchliners als auch dessen Einziehen sowie die thermische wie auch die Härtung mittels UV-Strahlung der Harze des Schlauchliners. Unter dem Begriff "UV-Strahlung" wird im Rahmen dieser Erfindung elektromagnetische Strahlung in einem Wellenlängenbereich von 200 bis 400 nm verstanden. Die erfindungsgemäße Mehrschichtfolie ist in einer bestimmten Ausführungsform zur Verwendung als Schlauchinnenfolie eines Schlauchliners zumindest teilweise durchlässig für UV-Strahlung, vorzugsweise zu wenigstens 80%, besonders bevorzugt zu wenigstens 90%. Bei Ausbildung der erfindungsgemäßen Schlauchfolie als Schlauchinnenfolie ist diese Folie vorzugsweise mit einer wie oben beschriebenen Strahlenvernetzung behandelt worden, um ihre mechanischen und thermischen Eigenschaften weiter zu verbessern.

Die Erfindung betrifft gleichfalls ein Schlauchlining-System, welches einen Preliner oder eine Gleitfolie, der bzw. die vorzugsweise als erfindungsgemäße Mehrschichtfolie aufgebaut ist, sowie einen Schlauchliner umfasst, wobei der Schlauchliner eine Schlauchinnenfolie in Form einer erfindungsgemäßen, vorzugsweise mit Beta- oder Gammastrahlung vernetzten Mehrschichtfolie, eine als Schlauchfolie ausgebildete Außenfolie, die vorteilhafterweise UV-Strahlung absorbiert und/oder reflektiert und die zur Anlage an einem Preliner oder einer Gleitfolie vorgesehen ist, sowie ein zwischen diesen beiden Schlauchfolien angeordnetes und mit einem reaktiven Kunststoffharz getränktes Trägermaterial (z.B. Glasfasergewebe, Filze, Vliese, Textilien), das nach der Aushärtung das sanierte Kanalinnenrohr bildet, umfasst. Nach der Aushärtung des Harzes kann bei bestimmten Ausführungen die erfindungsgemäße Schlauchinnenfolie abgezogen werden. Die Preliner- oder Gleitfolie wird im sanierten Rohr belassen. Gemäß einer vorteilhaften Ausführungsform weisen die Schlauchinnenfolie, vorzugsweise mittels Strahlenvernetzung vorbehandelt, einerseits sowie der Preliner bzw. die Gleitfolie andererseits den gleichen erfindungsgemäßen Schichtaufbau auf.

In alternativen Verwendungen kann die erfindungsgemäße Folie als Verpackungsmaterial für Lebensmittel oder für den sog. Non-Food-Bereich, als Außenverkleidung, als außenliegende Abdeckung von Gebäudeteilen, als Bag-in-Box-Folie, als Membranfolie, als Folie für Sicherheitsgläser, Solarmodule oder Airbags, als Klebefolie, Tape oder Band, für die Kabelummantelung, in Schutzanzügen, bei Textilien und Bekleidungen, als Dekorfolie bei Laminaten für Holz-, Naturfaser- und Kunststoffverbundwerkstoffe, als Trenn- und Schutzfolie im Prepreg-Bereich (preimpregnated fibers, vorimprägnierte Fasern), als Schutzfolie, für Schilder sowie Anzeigetafeln, für medizinische Anwendungen wie Pflaster, für Hygieneartikel wie Windeln, für Displays oder als Isoliermaterial eingesetzt werden. Auch bei diesen Folien ist es bevorzugt, eine Strahlenbehandlung durchzuführen, um eine Vernetzung der Polymere in einer oder mehreren Schichten und/oder zwischen mindestens zwei Schichten zu fördern.

Die erfindungsgemäße Folie kann auch geschäumt werden oder mindestens eine geschäumte Schicht enthalten.

Die Folie kann ferner auf der oder den Oberfläche/n noch mit einem Pulver oder Puder versehen werden. Bevorzugt wird dazu beispielsweise Talkum eingesetzt.

In dem vorgenannten Zusammenhang ist ebenfalls zu beachten, dass bevorzugt der Reibwert des erfindungsgemäßen Preliners gegenüber der Außenfolie des Einlegeschlauchs (Schlauchliners), der in den zu sanierenden Kanal mit Hilfe der Gleitfolie bzw. des Preliners eingeführt wird, klein ist. Gemäß einer diesbezüglich vorteilhaften Ausführungsform lässt sich eine Verringerung des Reibungskoeffizienten (COF) mit Wachsadditiven, beispielsweise Ethylen-bis-stearamid (EBS), Erucasäureamid (ESA), etc. sowie mit Trennmitteln erreichen. Diese Wachsadditive bzw. Trennmittel werden bevorzugt auf die der Außenfolie des Schlauchliners zugewandten Oberfläche der Gleitfolie appliziert.

Auch ist eine Extrusionsbeschichtung möglich, ebenso wie ein Glättwerkprozess. Des Weiteren sind Laminierungstechniken einsetzbar.

Des Weiteren ist es vorteilhafterweise möglich, die erfindungsgemäße Folie mit einem Non-Woven-Material, Textil, Nadelfilz, Synthesefasern oder Vlies zu kaschieren, wobei eine Thermokaschierung oder Kleberkaschierung zum Einsatz kommen kann. Eine derartige Kaschierung eines Preliners kann beispielsweise eine noch bessere Anbindung des in die Preliner-Folie inversierten Schlauchliners ermöglichen.

Im Falle der Ausbildung der erfindungsgemäßen Folie als Preliner ist eine PE-Basis für die Kaschierfolie bevorzugt, da im Zuge der exothermen Aushärtung der als Trägermaterial dienenden Reaktivharze im Schlauchliner durch die Temperaturerhöhung aufgrund der Initiierung mit UV-Licht (oder beispielsweise heißen Wassers oder Wasserdampfes als alternative Quellen zur Harzhärtung) eine Anknüpfung der PE-Kaschierfolie an den (ausgehärteten) Schlauchliner realisiert werden kann. Hierdurch kann die Stabilität des Schlauchliners, insbesondere nach dessen Aushärtung, nochmals erheblich verstärkt werden, was zur Verbesserung der Festigkeit des mit Schlauchliner sanierten Kanals beiträgt.

Die erfindungsgemäße Folie kann auch nachträglich noch gereckt oder geprägt werden. Auch ist eine Bedruckung möglich.

Die Strukturierung der Folienoberfläche kann zudem durch Aufgießen auf eine entsprechend strukturierte Walze erfolgen.

Gemäß einer vorteilhaften Ausführungsform wird die Folienoberfläche durch Zugabe von Abstandshaltern (Antiblockmittel) aufgeraut, beispielsweise durch Ansetzen eines Batches mit gröberen Partikeln mit einem Durchmesser von 0,01 bis 10 $\mu$m. Beispielsweise werden hierzu Silica-Partikel in mindestens einer der Außenschichten verwendet. Hierdurch wird eine Adhäsion zwischen der Gleitfolie bzw. dem Preliner und dem Einlegeschlauch bzw. Schlauchliner verhindert.

Weitere Verarbeitungsmöglichkeiten bestehen in einem Zusammenbringen der erfindungsgemäßen Folie mit einem Gelege oder Gewirke, z.B. einem Kunststoffnetz oder einem Gitter. Alternativ kann dieses Gitter, Gelege bzw. Gewirke in die Folie zum Zwecke der weiteren Verstärkung mit eingebracht werden.

**Ausführungsbeispiele:**

Die nachfolgenden Beispiele und Vergleichsbeispiele dienen zur Erläuterung der Erfindung und sind nicht einschränkend auszulegen.

**I. Chemische Charakterisierung der eingesetzten Rohstoffe**

Als Polyamide (PA) für die mindestens eine Schicht (a) sind einsetzbar handelsübliche Polyamide (jeweilige Markennamen in Klammern) der Firmen BASF (Ultramid), Lanxess (Durethan), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex), Rhodia (Technyl, Stabamid), UBE, DSM (Novamid), Atofina (Rilsan). Bei den im Folgenden vorgestellten Beispielen wurde als Polyamid-Schicht stets eine Mischung aus 12% Durethan B40 FAM (Lanxess), das ein PA 6 ist, und 88% Durethan C38 F (Lanxess), das ein Copolyamid mittlerer Viskosität ist, oder eine reine PA-Schicht Durethan C38F (Lanxess) verwendet.

Ein typischer einsetzbarer Haftvermittler ist beispielsweise Admer NF498E, das ein mit Maleinsäureanhydridgruppen modifiziertes LDPE der Firma Mitsui ist. Ebenfalls wurde Admer AT1955E der Firma Mitsui verwendet. Admer®-Substanzen sind PE-Copolymere mit Maleinsäureanhydrid-Gruppen (MSA-Gruppen), die eine große Adhäsion zu PET, EVOH und PA besitzen, während sie sehr gut verarbeitbar sind und eine thermische Stabilität aufweisen, die äquivalent zu gewöhnlichem PE ist.

Typische einsetzbare Polyolefine sind beispielsweise Lupolen 2420 F, das ein LDPE der Firma LyondellBasell Polymers ist, und Exceed 1327 CA der Firma ExxonMobil Chemical Company, das ein mittels Metallocen-Katalyse hergestelltes Ethylen-Copolymer ist, bei dessen Polymerisation neben Ethylen Hexen als weiteres Co-Monomer eingesetzt wird.

**II. Herstellung der Mehrschichtfolien**

Die erfindungsgemäßen Mehrschichtfolien der Beispiele B1, B2, B8, B9 und B10 sind 3-Schicht Blasfolien. Die erfindungsgemäßen Mehrschichtfolien der Beispiele B3 bis B7, B11 bestehen jeweils aus fünf Schichten. Die einzelnen Schichten der Mehrschichtfolien grenzen jeweils in der Reihenfolge unmittelbar aneinander an, in der sie nachstehend aufgeführt sind ("Schichtnummer"). Die erfindungsgemäßen Schlauchfolien wurden mittels Blasfolien-CoExtrusion hergestellt.

Bei den erfindungsgemäßen Mehrschichtfolien der Beispiele B3, B4 und B6 wurde Ethylen-(Meth)acrylat eingesetzt. Als ein Ethylen-(Meth)acrylat wurde Lucofin 1494H der deutschen Firma Lucobit AG verwendet, das ein chemisch modifiziertes Polyethylen in Form von EBA (Ethylen-Butylacrylat) gepfropft mit Maleinsäureanhydrid (MSA) ist. Vorliegend wurde es für Haftvermittlerschichten (Schichten (d) entsprechend der Ansprüche) von erfindungsgemäßen Mehrschichtfolien eingesetzt. Zudem fand Lucofin 1400HN Puder Einsatz, das ein polares Copolymer aus Ethylen und Butylacrylat mit niedriger Kristallinität ist. Aufgrund seiner chemischen Struktur ist Lucofin 1400HN Puder weicher und flexibler als Ethylenhomopolymere mit vergleichbarer Dichte. Lucofin 1400HN Puder wird als ungefärbtes und nicht additiviertes Pulver in Naturfarbe geliefert. Vorliegend wurde Lucofin 1400HN Puder für Haftvermittlerschichten (d.h. Schichten (d) gemäß den Ansprüchen) als auch für Zwischenschichten eingesetzt. Andere einsetzbare Ethylen-(Meth)acrylat-Copolymere wurden schon weiter oben aufgelistet.

Als thermoplastisches Elastomer kam Desmopan DP 2586A (200er Reihe) mit einer Shore-Härte 86 A (nach Methode A nach ISO 868) von BAYER zum Einsatz. Desmopan DP 2586A ist ein TPU Ester. Außerdem wurde Pearlthane Clear 15N80 von MERQUINSA verwendet, das auf einem TPU Polyether-Copolymer basiert und eine Shore-Härte 82 A (nach ASTM D-2240) aufweist.

Die Folie des Vergleichsbeispiels V1 war eine handelsübliche ®-Folie mit einer Dicke von 108 μm der Firma Valeron Strength Films. Valeron-Folien können nur als Flachfolie hergestellt werden. Durch Aufbringen eines dünnen Streifens mit Hotmelt wurde die Folie zu einem Schlauch verschweißt.

Die Folie des Vergleichsbeispiels V2 war eine 110 μm dicke einschichtige LDPE-Folie in Schlauchform mit einem PE-Schmelzpunkt von 111°C.

Die in den Tabellen angegebenen prozentualen Anteile der einzelnen Chemikalien in den Schichten sind Gewichtsprozent-Angaben.

Beispiel 1: Preliner-Folie, 3-Schicht Blasextrusion, 120 μm

| Schichtnummer | Schicht | Zusammensetzung | Anteil in Schicht in % | Dicke in μm |
|---|---|---|---|---|
| 1 | (a) | • Durethan C38 F <br> • Durethan B40 FAM | • 88 <br> • 12 | 40 |
| 2 | (d) | • Admer NF498E | • 100 | 10 |
| 3 | (b) | • Lupolen 2420 F <br> • Exceed 1327 CA | • 70 <br> • 30 | 70 |
| | | | | Gesamtdicke: 120 μm |

Beispiel 2: Preliner-Folie, 3-Schicht Blasextrusion, 80 μm

| Schichtnummer | Schicht | Zusammensetzung | Anteil in Schicht in % | Dicke in μm |
|---|---|---|---|---|
| 1 | (a) | • Durethan C38 F | • 100 | 20 |
| 2 | (d) | • Admer NF498E | • 100 | 10 |
| 3 | (b) | • Lupolen 2420 F <br> • Exceed 1327 CA | • 70 <br> • 30 | 50 |
| | | | | Gesamtdicke: 80 μm |

Beispiel 3: Preliner-Folie, 5-Schicht Blasextrusion, 100 μm

| Schichtnummer | Schicht | Zusammensetzung | Anteil in Schicht in % | Dicke in μm |
|---|---|---|---|---|
| 1 | (a) | • Durethan C38 F | • 100 | 20 |
| 2 | (d) | • Lucofin 1494 H | • 100 | 10 |
| 3 | (b) | • Lupolen 2420 F <br> • Exceed 1327 CA | • 70 <br> • 30 | 30 |
| 4 | (d) | • Lucofin 1494 H | • 100 | 10 |

(fortgesetzt)

| Schichtnummer | Schicht | Zusammensetzung | Anteil in Schicht in % | Dicke in $\mu$m |
|---|---|---|---|---|
| 5 | (b) | • Lupolen 2420 F<br>• Exceed 1327 CA | • 70<br>• 30 | 30 |
| | | | | Gesamtdicke: 100 $\mu$m |

Beispiel 4: Preliner-Folie, 5-Schicht Blasextrusion, 200 $\mu$m

| Schichtnummer | Schicht | Zusammensetzung | Anteil in Schicht in % | Dicke in $\mu$m |
|---|---|---|---|---|
| 1 | (a) | • Durethan C38 F<br>• Durethan B40 FAM | • 88<br>• 12 | 40 |
| 2 | (d) | • Lucofin 1494 H | • 100 | 10 |
| 3 | (b) | • Lucofin 1400 HN<br>• Lupolen 2420 F | • 50<br>• 50 | 65 |
| 4 | (d) | • Lucofin 1494 H | • 100 | 10 |
| 5 | (b) | • Lucofin 1400 HN<br>• Lupolen 2420 F | • 50<br>• 50 | 75 |
| | | | | Gesamtdicke: 200 $\mu$m |

Beispiel 5: Preliner-Folie, 5-Schicht Blasextrusion, 120 $\mu$m

| Schichtnummer | Schicht | Zusammensetzung | Anteil in Schicht in % | Dicke in $\mu$m |
|---|---|---|---|---|
| 1 | (a) | • Durethan C38 F | • 100 | 20 |
| 2 | (d) | • Admer NF498E | • 100 | 10 |
| 3 | (a) | • Durethan C38 F | • 100 | 20 |
| 4 | (d) | • Admer NF498E | • 100 | 10 |
| 5 | (b) | • Lupolen 2420 F<br>• Exceed 1327 CA | • 70<br>• 30 | 60 |
| | | | | Gesamtdicke: 120 $\mu$m |

Beispiel 6: Preliner-Folie, 5-Schicht Blasextrusion, 120 $\mu$m

| Schichtnummer | Schicht | Zusammensetzung | Anteil in Schicht in % | Dicke in $\mu$m |
|---|---|---|---|---|
| 1 | (a) | • Durethan C38 F | • 100 | 40 |
| 2 | (d) | • Admer NF498E | • 100 | 10 |
| 3 | | • Lucofin 1400 HN | • 100 | 30 |
| 4 | (d) | • Admer NF498E | • 100 | 10 |
| 5 | (b) | • Lucofin 1400 HN<br>• Lupolen 2420 F | • 50<br>• 50 | 30 |
| | | | | Gesamtdicke: 120 $\mu$m |

Beispiel 7: Preliner-Folie, 5-Schicht Blasextrusion, 120 $\mu$m

| Schichtnummer | Schicht | Zusammensetzung | Anteil in Schicht in % | Dicke in $\mu$m |
|---|---|---|---|---|
| 1 | (b) | • Lupolen 2420 F<br>• Exceed 1327 CA | • 70<br>• 30 | 30 |
| 2 | (d) | • Admer NF498E | • 100 | 10 |
| 3 | (a) | • Durethan C38 F | • 100 | 40 |
| 4 | (d) | • Admer NF498E | • 100 | 10 |
| 5 | (b) | • Lupolen 2420 F<br>• Exceed 1327 CA | • 70<br>• 30 | 30 |
| | | | | Gesamtdicke: 120 $\mu$m |

Beispiel 8: Preliner-Folie, 3-Schicht Blasextrusion, 120 $\mu$m, symmetrisch

| Schichtnummer | Schicht | Zusammensetzung | Anteil in Schicht in % | Dicke in $\mu$m |
|---|---|---|---|---|
| 1 | (a) | • Durethan C38 F | • 100 | 20 |
| 2 | (c) | • Desmopan DP 2586A | • 100 | 80 |
| 3 | (a) | • Durethan C38 F | • 100 | 20 |
| | | | | Gesamtdicke: 120 $\mu$m |

Beispiel 9: Preliner-Folie, 3-Schicht Blasextrusion, 100 $\mu$m

| Schichtnummer | Schicht | Zusammensetzung | Anteil in Schicht in % | Dicke in $\mu$m |
|---|---|---|---|---|
| 1 | (a) | • Durethan C38 F | • 100 | 20 |
| 2 | (c) | • Desmopan DP 2586A | • 100 | 40 |
| 3 | (c) | • Desmopan DP 2586A<br>• Abstandshalter/Antiblockmittel | • 97<br>• 3 | 40 |
| | | | | Gesamtdicke: 100 $\mu$m |

Beispiel 10: Preliner-Folie, 3-Schicht Blasextrusion, 120 $\mu$m, symmetrisch

| Schichtnummer | Schicht | Zusammensetzung | Anteil in Schicht in % | Dicke in $\mu$m |
|---|---|---|---|---|
| 1 | (a) | • Durethan C38 F | • 100 | 20 |
| 2 | (c) | • Pearlthane Clear 15N80 | • 100 | 80 |
| 3 | (a) | • Durethan C38 F | • 100 | 20 |
| | | | | Gesamtdicke: 120 $\mu$m |

Beispiel 11: Preliner-Folie, 5-Schicht Blasextrusion, 140 $\mu$m, asymmetrisch

| Schichtnummer | Schicht | Zusammensetzung | Anteil in Schicht in % | Dicke in $\mu$m |
|---|---|---|---|---|
| 1 | (b) | • Lupolen 2420 F<br>• Exceed 1327 CA | • 70<br>• 30 | 30 |
| 2 | (b) | • Lupolen 2420 F<br>• Exceed 1327 CA | • 70<br>• 30 | 30 |
| 3 | (d) | • Admer AT1955E | • 100 | 10 |

(fortgesetzt)

| Schichtnummer | Schicht | Zusammensetzung | Anteil in Schicht in % | Dicke in $\mu$m |
|---|---|---|---|---|
| 4 | (c) | • Pearlthane 16N85 UV | • 100 | 30 |
| 5 | (a) | • Durethan C38 F | • 100 | 40 |
| | | | | Gesamtdicke: 140 $\mu$m |

**Prüfverfahren und -geräte**

Zur Bestimmung der Dehnbarkeit der zwei Vergleichsbeispiel-Folien V1 und V2 sowie der verschiedenen erfindungsgemäßen Mehrschichtfolien in Form von Schlauchfolien (B1 bis B11) wurden Aufblastests durchgeführt. Ist eine zu testende Mehrschichtfolie keine Schlauchfolie, sondern z.B. eine Flachfolie, wird diese zu einem Schlauch versiegelt, um anschließend dessen Dehnbarkeit zu bestimmen. Die Versuche im Rahmen der Erfindung wurden an Schlauchfolien durchgeführt.

Zur Vorbereitung wurde (ein 5 m langer Schlauch oder) eine 5 m lange Schlauchfolie, die einen Schlauchumfang von 1175 mm bis 1180 mm aufwies, an beiden Enden durch zwei Metallscheiben mit einem geeigneten Durchmesser luftdicht verschlossen. Um die Luftdichtigkeit zu erreichen, wurden - wie es gängige Praxis bei solchen Aufblastests ist - Spanngurte und handelsübliches Gewebeklebeband verwendet. Durch ein Ventil in einem der beiden Metallscheiben wurde Druckluft in die Schlauchfolie geleitet, bis diese platzte. Vor dem Platzen waren Schichtabrisse von innenliegenden Folienschichten erkennbar, die als "Spleiß" (Engl.: splice) bezeichnet werden. Hieraus bildete sich eine nur lokal auftretende Blase in der Mehrschichtfolie, welche dann bei weiterem Aufblasen zu einem Folienriss und einem Platzen der Schlauchfolie führte. Die maximale Dehnung (Angabe in Prozent) wurde ermittelt, indem der bis zum Platzen erzielte Außenumfang der Schlauchfolie an ihrer größten Stelle gemessen und mit dem anfänglichen Schlauchdurchmesser verglichen wurde, wobei folgende Formel verwendet wurde:

$$\textit{Maximale Dehnbarkeit} = [(\textit{Schlauchdurchmesser nach Aufblasen / anfänglicher Schlauchdurchmesser vor dem Aufblasen}) - 1] \cdot 100$$

Die gleiche Formel gilt für den "Folienspleiß", d.h. dem ersten bemerkbaren Abriss einer Schicht der Schlauchfolie (ohne dass der gesamte Schlauch davon betroffen ist):

$$\textit{„Spleiß"} = [(\textit{Schlauchdurchmesser nach Aufblasen und erstem erkennbaren Schichtabriss / anfänglicher Schlauchdurchmesser vor dem Aufblasen}) - 1] \cdot 100$$

Für die weiteren Prüfungen wurden die Folien 24 Stunden im Normklima gelagert.

Als Prüfgerät für die Zugversuche (Reißeigenschaften, Elastizitätsmodul, etc.) sowie die Weiterreißversuche wurde eine Universalprüfmaschine 281813 der Fa. Frank verwendet, wobei die Kraft der Kraftmessdose 200 N betrug. Die Prüfgeschwindigkeit betrug 300 mm/min, wobei 15 mm breite Streifen für den Zugversuch verwendet wurden.

Als Prüfgerät für die Gleitreibung wurde ein BETEX Slipping Tester RK2 verwendet mit einer Kraftmessdose von 10 N. Es kam ein LINSEIS L120 E Schreiber zum Einsatz. Zwei Folienstücke wurden mit einem Gewicht (1,96 N) belastet, übereinander gezogen und die dazu notwendige Kraft gemessen.

Als Prüfgerät für die Siegelnahtfestigkeit wurde gleichfalls die besagte Universalprüfmaschine 281813 der Fa. Frank mit einer Kraftmessdose von 200 N verwendet. Die Prüfgeschwindigkeit wurde auf 100 mm/min eingestellt. 15 mm breite Streifen wurden mittels eines Labor-Siegelgeräts SGPE 20 der Fa. Kopp mit einer Siegelbackenbreite von 10 mm plan gesiegelt. Die Siegelzeit betrug 1 sec, die Siegeltemperatur 130°C und der Siegeldruck 300 N/m$^2$.

**Messergebnisse**

I. Dehnbarkeit

Die Ergebnisse aus den Aufblastests sind in der folgenden Tabelle zusammengefasst:

| Beispiel/ Vergleichsbeispiel | Spleiß [%] | Dehnbarkeit [%] bis zum Platzen |
|:---:|:---:|:---:|
| **B1** | 17,3 | 90,5 |
| **B2** | 16,5 | 87,9 |
| **B3** | 30,5 | 131,5 |
| **B4** | 25,6 | 133,5 |
| **B5** | 16,9 | 92,7 |
| **B6** | 31,2 | 132,1 |
| **B7** | 15,6 | 82,0 |
| **B8** | 29,3 | 135,2 |
| **B9** | 36,4 | 138,3 |
| **B10** | 31,2 | 139,9 |
| **B11** | 27,5 | 126,6 |
| **V1** | 5,9 | 25,2 |
| **V2** | - | 45,7 |

Die Aufblastests zur Bestimmung der Dehnbarkeit zeigen, dass die Folie aus dem Vergleichsbeispiel V1 nur eine sehr geringe Dehnung von 5,9 % bis zum Spleiß bzw. 25,2 % bis zum Platzen der Folie besitzt. Dadurch ist der Einsatz dieser Folie als Preliner im Rahmen des Schlauchlining-Verfahrens bei der grabenlosen Kanalsanierung oder auch als Schlauchinnenfolie bei Schlauchlinern kaum geeignet. Zwar sind die mechanischen Eigenschaften der Folie aus Vergleichsbeispiel 1 in Bezug auf Weiterreißfestigkeit bzw. Durchstoßfestigkeit sehr gut, doch geht dies einher mit einer mangelnden Dehnfähigkeit, wodurch sich die Folien für die Verwendung in der grabenlosen Kanalsanierung nur bedingt eignen.

Die Folie aus Vergleichsbeispiel V2, eine LDPE-Monofolie in Schlauchform, zeigt keinen Spleiß im eigentlichen Sinn, da ja nur eine Schicht vorliegt. Diese Schicht zerplatzt bei einer Dehnung von 45,7 % und zeigt, dass die mechanischen Eigenschaften völlig unzureichend sind und der angelegten Druckluft nur sehr wenig Widerstand entgegen gesetzt werden kann. Diese Folie besitzt kaum mechanische Festigkeit und kann problemlos eingerissen werden. Für die Verwendung als Preliner oder als Schlauchinnenfolie ist die Folie damit ungenügend.

Die erfindungsgemäßen Folien aus den Beispielen B1 bis B11 hingegen besitzen einerseits sehr gute Werte für die Weiterreißfestigkeit und Durchstoßfestigkeit (auch wenn die entsprechenden Werte der Folie aus dem Vergleichsbeispiel V1 nicht erreicht werden), und andererseits eine sehr hohe Dehnbarkeit bis zum Folienspleiß bzw. bis zum Zerplatzen der Folie. So liegt bei allen Folien aus den Beispielen B1 bis B11 eine Dehnung bis zum Spleiß von über 15 % vor; teilweise werden sogar Werte weit über 30 % erreicht (Beispiele B3, B6, besonders B9 und B10). Diese vorteilhaften Eigenschaften sind insbesondere darin begründet, dass die Folien B1 bis B11 mindestens eine Polyamid-enthaltende Schicht aufweisen und zudem eine Schicht mit einem Polyolefinanteil und/oder eine Schicht mit einem thermoplastischen Elastomer TPE aufweisen.

Wird in einer Schicht ein Polyolefin verwendet und dieses zusätzlich mit einem Ethylen-(Meth)acrylat-Copolymer vermischt oder durch ein solches ersetzt, werden besonders hohe Dehnfähigkeiten erreicht (Beispiele B3, B4 und B6). Den gleichen Effekt, d.h. besonders hohe Dehnwerte bis zum Spleiß bzw. bis zum Zerplatzen der Folie, hat die Verwendung von TPE (vorliegend ein thermoplastisches Polyurethan TPU) auf Basis von Ester- oder Ether-Weichsegmenten in einer oder mehreren Schichten (Beispiele B8 bis B11).

Die Dehnung bis zum Bruch bzw. bis zum Platzen der Folien beläuft sich bei den erfindungsgemäßen Folien aus den Beispielen B1 bis B11 auf über 80 %, teilweise sogar auf weit über 100 % (Spitzenwert 139,9 % in Beispiel B10).

Die erfindungsgemäße Verwendung von Polyamid sorgt nicht nur für eine Erhöhung der mechanischen Festigkeiten der Folien wie Ein- und Weiterreißfestigkeit, sondern realisiert auch eine Barrierefunktion gegenüber Ölen und Monomeren aus den Harzen, mit denen das Trägermaterial beim Schlauchlining-Verfahren getränkt ist. Dies schützt das Harz vor dem Austrocknen.

Im Folgenden sind die Messergebnisse zum Elastizitätsmodul (auch: E-Modul, Zugmodul, Elastizitätskoeffizient oder Youngscher Modul) aufgelistet. Der Elastizitätsmodul beschreibt den Zusammenhang zwischen Spannung und Dehnung bei der Verformung eines festen Körpers bei linear elastischem Verhalten.

| Beispiel/ Vergleichsbeispiel | E-Modul in N/mm$^2$ md (machine direction) | E-Modul in N/mm$^2$ cd (cross direction) |
|:---:|:---:|:---:|
| **B1** | 190 | 196 |
| **B2** | 137 | 141 |
| **B3** | 125 | 126 |
| **B4** | 153 | 154 |
| **B5** | 149 | 151 |
| **B6** | 115 | 119 |
| **B7** | 150 | 155 |
| **B8** | 71 | 73 |
| **B9** | 59 | 59 |
| **B10** | 28 | 29 |
| **B11** | 105 | 106 |
| **V1** | 296 | 307 |
| **V2** | 110 | 115 |

Der E-Modul einer Folie gibt an, wie steif oder wie flexibel eine Folie ist. Je größer der E-Modul einer Folie ist, umso steifer ist die Folie. Die hohe Steifigkeit bzw. die damit verbundene geringere Flexibilität der Folie geht einher mit einer deutlich verringerten Fähigkeit der Folie, sich umstülpen zu lassen. Doch gerade das Umstülpen ist bei einer Folie besonders gefragt, wenn es um deren Einsatz als Preliner bei der grabenlosen Kanalsanierung geht, d.h. wenn der Preliner mit dem Schlauchliner in den Kanal inversiert wird oder wenn der Preliner schon vorher eingestülpt wird.

Die erfindungsgemäßen Folien aus den Beispielen B1 bis B7 weisen geringe E-Module auf, die sich in md- oder cd-Richtung zwischen 115 und 196 N/mm$^2$ bewegen. Niedrigere E-Moduln finden sich bei den erfindungsgemäßen Folien aus den Beispielen B2 (mit Copolyamid Durethan C38 F als Polyamid, E-Modul ca. 140 N/mm$^2$), B3 (mit Lucofin 1494 H auf Basis Ethylen-Acrylat in der Haftvermittler-Schicht und Copolyamid als Polyamid, E-Modul ca. 125 N/mm$^2$), B5 (zwei Schichten mit Copolyamid Durethan C38 F, E-Modul ca. 150 N/mm$^2$), B6 (Verwendung von Ethylen-Acrylat-Copolymeren, auch in Mischung mit dem Polyolefin Polyethylen, besonders niedriger E-Modul von ca. 117 N/mm$^2$), sowie B7 (mittlere Schicht Copolyamid Durethan C38 F, E-Modul ca. 152 N/mm$^2$).

Wird das Copolyamid Durethan C38 F mit einem etwas steiferen PA 6 Homopolyamid vermischt (siehe Beispiele B1 und B4 - hier Mischung 88 % Copolyamid Durethan C38 F mit 12 % PA 6 Durethan B40 FAM), so führt dies zu tendenziell höheren E-Modulen der Folien.

Die deutlichste Verringerung der E-Module ergibt sich durch den Einsatz von thermoplastischen Elastomeren (TPE). Bei der Beispielfolie B8, die eine Schicht aus Ester-basiertem TPU aufweist, liegt der E-Modul bei ca. 72 N/mm$^2$.

Weiter verringert werden kann der E-Modul - wie auch zu erwarten ist -, indem der Anteil an TPU in der Gesamtfolie erhöht wird, wie Beispiel B9 zeigt (hier E-Modul bei 59 N/mm$^2$).

Wird ein Polyether-basiertes TPU verwendet (Beispiel B10), ergibt sich ein E-Modul von lediglich 29 N/mm$^2$ und damit gegenüber der baugleichen Folie aus Beispiel B8 (hier mit Polyester-basiertem TPU) eine Verringerung des E-Moduls um 43 N/mm$^2$.

Beispiel B11 ist eine Folie bestehend aus Polyolefin, Haftvermittler, TPU (Polyether-basiert) und Polyamid. Der E-Modul ist mit einem Wert von ca. 105 N/mm$^2$ vergleichbar mit reinem LDPE (siehe Vergleichsbeispiel V2: ca. 112 N/mm$^2$) und liegt auf niedrigem Niveau. Damit kann der prinzipiellen Erhöhung des E-Moduls, die bei den erfindungsgemäßen Folien durch die Polyamid-enthaltende Schicht erfolgt, entgegengesteuert werden, indem ein TPE als weiteres Material in einer weiteren Schicht eingebracht wird.

Das bisher als Preliner verwendete Produkt aus Vergleichsbeispiel V1 weist hingegen einen deutlich höheren E-Modul auf. Im Vergleich zu den erfindungsgemäßen Folien aus den Beispielen B1 bis B11 liegt der E-Modul bei einer 108 μm dicken Valeron-Folie um den Faktor ca. 1,5 bis fast 10 höher. Somit ist die Folie aus Vergleichsbeispiel V1 deutlich schlechter umstülpbar bzw. zu inversieren als die erfindungsgemäßen Folien aus den Beispielen B1 bis B11.

II. Reibung

Im Folgenden sind die Ergebnisse zu den Reibungseigenschaften wiedergegeben. Die Bestimmung der Reibungseigenschaften ist eine Grundeigenschaft von Folien und Verpackungen. Der Reibungskoeffizient (Haftreibung/Gleitreibung) wurde nach DIN EN ISO 8295 bestimmt und wird auch Haftreibungszahl oder Gleitreibungszahl genannt. Weiterhin sollte die Oberfläche der Reibungspartner berücksichtigt werden, um festzulegen, ob eine Reibungsprüfung Metall gegen Folienoberfläche oder Folienoberfläche gegen Folienoberfläche sinnvoll ist. Die Reibungszahl ist ein Quotient aus Reibungskraft und Auflagekraft des Schlittens und somit dimensionslos. Aufgrund des genormten Schlittengewichtes von 200 g ist die eigentliche Reibungskraft rund doppelt so groß wie die Reibungszahl.

| Beispiel/ Vergleichsbeispiel | Gleitreibung Seite 1 gegen Seite 1 (Material) | Gleitreibung Seite 2 gegen Seite 2 (Material) | Folienaufbau |
|---|---|---|---|
| **B1** | 0,23 (PA) | 0,21 (PE) | asymmetrisch |
| **B2** | 0,20 (PA) | 0,16 (PE) | asymmetrisch |
| **B3** | 0,19 (PA) | 0,12 (PE) | asymmetrisch |
| **B4** | 0,25 (PA) | 0,09 (PE) | asymmetrisch |
| **B5** | 0,29 (PA) | 0,17 (PE) | asymmetrisch |
| **B6** | 0,24 (PA) | 0,23 (PE) | asymmetrisch |
| **B7** | 0,08 (PE) | 0,10 (PE) | symmetrisch |
| **B8** | 0,22 (PA) | 0,21 (PA) | symmetrisch |
| **B9** | 0,19 (PA) | 0,28 (TPU Ester) | asymmetrisch |
| **B10** | 0,20 (PA) | 0,22 (PA) | symmetrisch |
| **B11** | 0,11 (PE) | 0,22 (PA) | asymmetrisch |
| **V1** | 0,29 (HDPE) | 0,33 (HDPE) | symmetrisch |
| **V2** | 0,12 (LDPE) | 0,11 (LDPE) | symmetrisch |

Für die Anwendung als Preliner sind Folien mit geringem Reibungskoeffizienten erforderlich. Die erfindungsgemäßen Folien aus den Beispielen B1 bis B11 sind aufgrund ihrer geringen Reibungskoeffizienten besonders gut für die Verwendung als Preliner bei Schlauchlining-Verfahren zur grabenlosen Kanalsanierung geeignet.

Wie im Detail aus der Tabelle ersichtlich, können die erfindungsgemäßen Folien aus den Beispielen B1 bis B11 so eingestellt werden, dass deren Reibungskoeffizienten besonders niedrig sind. Bei den Beispielen B1 bis B11 ist ein Bereich von ca. 0,05 bis ca. 0,29 erzielt worden. Die Folie aus Vergleichsbeispiel V1 weist hingegen mit einem mittleren Reibungskoeffizienten von 0,31 einen höheren Wert auf. Die Folie aus Vergleichsbeispiel V2 hat einen niedrigen Reibungskoeffizienten von 0,12 und wäre diesbezüglich auch als Preliner oder als Gleitfolie für die Anwendung im Schlauchlining-Verfahren geeignet.

Wie dem Fachmann bekannt ist, gibt es eine Reihe von Additiven, deren Einsatz den Reibungskoeffizienten weiter verringert. Deren Wirkung ist beim Vergleichsbeispiel V1 aufgrund des Herstellungsprozesses dieser Folie hingegen sehr eingeschränkt.

III. Siegelnahtfestigkeit

Die Vergleichsfolie V1 liegt nur als Flachfolie vor und muss zum Schlauch gesiegelt werden, wobei eine Siegelnahtfestigkeit von 3,2 bis 10,5 N/15 mm erhalten wurde. Bei den genannten Siegelbedingungen weist die Folie aus Vergleichsbeispiel V1 demnach nur eine sehr schlechte Siegelfähigkeit auf. Da sie herstellungsbedingt nur als Flachfolie vorliegt, erfolgt die Verschweißung zu der für die Anwendung erforderlichen Schlauchform mittels Hotmelt-Klebstoffen. Die Siegelfähigkeit dieser Vergleichsfolie V1 ist viel zu gering, um bei dem resultierenden Schlauch eine Siegelnaht mit hoher Festigkeit zu gewährleisten. Auch der Einsatz von Hotmelt-Klebstoffen zum generellen Siegeln ist hier sehr kritisch, da grundsätzlich ein Problem der Haftung zwischen Hotmelt-Klebstoff und der Folie besteht. Bei Prelinern oder bei Schlauchinnenfolien ist eine hohe Siegelnahtfestigkeit von besonderer Wichtigkeit, um das Eindringen von Wasser (Preliner) oder das Ausdampfen von Harz (Schlauchinnenfolie) zu vermeiden. Die Folie aus dem Vergleichsbeispiel V1 weist diesbezüglich ein hohes Risiko in der Anwendung auf.

Wegen des Vorgesagten empfiehlt sich generell der Einsatz eines Schlauchs, erhalten durch Extrusion, da es dann keine Schwachstelle in Form einer Siegelnaht gibt. Die erfindungsgemäßen Folien weisen bevorzugt keine Siegelnaht auf, wodurch diese Folien keine "Schwachstelle" mehr aufweisen. Die Folienschläuche der erfindungsgemäßen Folien aus den Beispielen B1 bis B11 sind demnach völlig homogen und halten auch größten Belastungen Stand. Es ist eine höchste Barrierefunktion gegen Wasser oder gegen Monomere aus den Harzen gewährleistet.

Bei der in Schlauchform vorliegenden Vergleichsfolie V2 lag die Siegelnahtfestigkeit oberhalb von 30 N/15 mm; wegen der Schlauchform ist allerdings eine Siegelung zum Schlauch prinzipiell nicht erforderlich. Doch selbst wenn die Folie als Flachfolie vorliegt, kann die Folie aus V2 ohne Probleme zu einem Schlauch gesiegelt bzw. geschweißt werden.

Sollten die erfindungsgemäßen Folien B1 bis B7 und B11, die bevorzugt in Schlauchform vorliegen, zunächst jedoch als Flachfolien hergestellt werden, wird bevorzugt deren Polyolefin-Seite gesiegelt. Bei diesen Beispielfolien B1 bis B7 sowie B11 war die Siegelnahtfestigkeit, wie bei der Vergleichsfolie V2, ebenfalls weitaus größer als 30 N/15 mm, so dass diese Folien absolut fest und dicht sind.

Bei den Folien aus den Beispielen B8 bis B10 ist hingegen die Siegelfähigkeit vermindert, da keine Polyolefin-Außenschicht vorhanden ist. Ein Einsatz von Hotmelt-Klebstoffen ist aber nicht erforderlich, da die erfindungsgemäßen Folien aus den Beispielen B1 bis B8 und B10 bis B11 auf der Polyolefin-Seite bestens siegelfähig sind.

Zusammenfassung der Messergebnisse

Die folgende Tabelle zeigt abschließend die Vorteile der erfindungsgemäßen Folien aus den Beispielen B1 bis B11 mit der bisher im Stand der Technik verwendeten Folie aus dem Vergleichsbeispiel V1 in Bezug auf die für die Anwendung relevanten Eigenschaften.

| Name | Eigenschaft - relevant zur Verwendung als Preliner/Schlauchinnenfolie | | | | | | | |
|---|---|---|---|---|---|---|---|---|
| | Schlauchform | Siegelfähigkeit | Barriere, Dichtheit | WRF | DSF | Dehnfähigkeit | Flexibilität, Umstülpbarkeit | COF |
| B1 | ++ | ++ | ++ | + | + | + | 0/+ | 0/+ |
| B2 | ++ | ++ | ++ | + | + | + | + | 0/+ |
| B3 | ++ | ++ | ++ | + | + | ++ | ++ | 0/+ |
| B4 | ++ | ++ | ++ | + | + | ++ | + | 0/+ |
| B5 | ++ | ++ | ++ | + | + | + | + | 0 |
| B6 | ++ | ++ | ++ | + | + | ++ | ++ | 0/+ |
| B7 | ++ | ++ | ++ | + | + | + | + | + |
| B8 | ++ | 0/+ | ++ | + | + | ++ | ++ | 0/+ |
| B9 | ++ | 0/+ | ++ | + | + | ++ | ++ | 0/+ |
| B10 | ++ | 0/+ | ++ | + | + | ++ | ++ | 0/+ |
| B11 | ++ | ++ | ++ | + | + | ++ | ++ | 0/+ |
| V1 | 0 | - | -/0 | ++ | ++ | - | 0 | 0 |
| V2 | ++ | ++ | - | - | - | -/0 | ++ | 0/+ |

Legende:

- : unzureichende Werte
0: für die Anwendung ausreichend
+: für die Anwendung gut geeignet
++: für die Anwendung besonders gut geeignet
WRF: Weiterreißfestigkeit
DSF: Durchstoßfestigkeit
COF: Reibwert (Coefficient of Friction)

Aus der Tabelle geht hervor, dass sich die Eigenschaften der erfindungsgemäßen Folien aus den Beispielen B1 bis B11 von den Folien aus den Vergleichsbeispielen V1 und V2 in Bezug auf deren Eignung als Preliner, Wasserschutzfolie, Gleitfolie, Kalibrierfolie oder Schlauchinnenfolie im Rahmen des Schlauchlining-Verfahrens bei der grabenlosen Kanalsanierung deutlich hervorheben. Die erfindungsgemäßen Folien stellen damit eine deutliche Verbesserung gegenüber dem bisherigen Stand der Technik dar. Auch für die übrigen genannten Anwendungen ist die erfindungsgemäße Mehrschichtfolie hervorragend geeignet.

**Patentansprüche**

1. Mehrschichtige Folie, insbesondere in Form einer Schlauchfolie zur Verwendung als Preliner bei der grabenlosen Kanalsanierung mittels Schlauchlining-Verfahren, **gekennzeichnet durch** mindestens eine Schicht (a), welche mindestens ein Homo- oder Copolyamid mit einem prozentualen Gewichtsanteil von mehr als 25 Gew.-% enthält, vorzugsweise als Außenschicht, sowie **durch** mindestens eine Schicht (b) enthaltend mindestens ein thermoplastisches, gegebenenfalls modifiziertes, Olefin-Homo- oder Copolymer und/oder **durch** mindestens eine Schicht (c) enthaltend mindestens ein thermoplastisches Elastomer (TPE).

2. Folie nach Anspruch 1, **dadurch gekennzeichnet, dass** die mindestens eine Schicht (a) mehr als 50 Gew.-%, vorzugsweise mehr als 75 Gew.-%, bevorzugt mehr als 95 Gew.-% und ganz besonders bevorzugt im Wesentlichen 100 Gew.-% Homo- oder Copolyamid enthält.

3. Folie nach Anspruch 1 oder 2, **dadurch gekennzeichnet, dass** die mindestens eine Schicht (b) mehr als 20 Gew.-%, vorzugsweise mehr als 40 Gew.-% und bis zu 100 Gew.-% thermoplastisches Olefin-Homo- oder Copolymer enthält.

4. Folie nach einem oder mehreren der vorhergehenden Ansprüche, **dadurch gekennzeichnet, dass** die mindestens eine Schicht (c) mehr als 20 Gew.-%, vorzugsweise mehr als 40 Gew.-% und bis zu 100 Gew.-% thermoplastisches Elastomer (TPE) enthält.

5. Folie nach einem oder mehreren der vorhergehenden Ansprüche, **dadurch gekennzeichnet, dass** das mindestens eine thermoplastische Elastomer (TPE) in der mindestens einen Schicht (c) aus der folgenden Gruppe ausgewählt ist, die folgende Mitglieder umfasst:

   a) TPE-U bzw. TPU, d.h. thermoplastische Elastomere auf Urethanbasis;
   b) TPE-O bzw. TPO, d.h. thermoplastische Elastomere auf Olefinbasis, vorwiegend PP/EPDM;
   c) TPE-V bzw TPV, d.h. vernetzte thermoplastische Elastomere auf Olefinbasis, vorwiegend PP/EPDM;
   d) TPE-E bzw. TPC, d.h. thermoplastische Polyesterelastomere / thermoplastische Copolyester;
   e) TPE-S bzw. TPS, d.h. Styrol-Blockcopolymere (SBS, SEBS, SEPS, SEEPS und MBS);
   f) TPE-A bzw. TPA, d.h. thermoplastische Copolyamide;
   g) TPE-Silikon.

6. Folie nach einem oder mehreren der vorhergehenden Ansprüche, **gekennzeichnet durch** mindestens eine weitere als Haftvermittlerschicht (d) ausgebildete Schicht, welche vorzugsweise ein Olefin-Homo- oder Copolymer enthält, wobei die Haftvermittlerschicht (d) zwischen zwei Schichten (a), zwischen einer Schicht (a) und einer Schicht (b), zwischen zwei Schichten (b), zwischen einer Schicht (a) und einer Schicht (c), zwischen einer Schicht (b) und einer Schicht (c), oder zwischen zwei Schichten (c) angeordnet ist.

**7.** Folie nach einem oder mehreren der vorhergehenden Ansprüche, **dadurch gekennzeichnet, dass** beide Außenschichten als Schicht (a) ausgebildet sind, welche mindestens ein Homo- oder Copolyamid mit einem prozentualen Gewichtsanteil von mehr als 25 Gew.-% enthalten.

**8.** Folie nach einem oder mehreren der vorhergehenden Ansprüche, **dadurch gekennzeichnet, dass** Polymere in der Folie durch Bestrahlung mit Beta- oder Gammastrahlen vernetzt sind.

**9.** Folie nach einem oder mehreren der vorherigen Ansprüche, **dadurch gekennzeichnet, dass** die Folie eine Dicke von 20 bis 2000 $\mu$m, vorzugsweise von 40 bis 1000 $\mu$m, besonders bevorzugt von 60 bis 400 $\mu$m, insbesondere von 80 bis 250 $\mu$m aufweist.

**10.** Folie nach einem oder mehreren der vorhergehenden Ansprüche, **dadurch gekennzeichnet, dass** in der mindestens einen Schicht (b), die ein Olefin-Homo- oder Copolymer enthält, oder einer Haftvermittlerschicht (d) mindestens ein Ethylen-(Meth)Acrylat-Copolymer, in funktionalisierter oder nicht-funktionalisierter Form, enthalten ist, wobei der prozentuale Gewichtsanteil des mindestens einen Ethylen-(Meth)Acrylat-Copolymers in mindestens einer der Schichten (b) bzw. (d) vorzugsweise im Bereich von 0,1 bis 100% liegt, vorzugsweise bei mindestens 30 Gew.-%.

**11.** Folie nach einem oder mehreren der vorherigen Ansprüche, **dadurch gekennzeichnet, dass** einer oder mehrere der folgenden Stoffe in mindestens einer der Folienschichten enthalten sind: Polystyrol (PS); Polyhalogenide, wie z. B. PVC und/oder Polyvinylidenchlorid (PVdC); Ethylenvinylalkohol-Copolymer (EVOH), Polyvinylalkohol (PVOH oder PVAL), Haftvermittler, Ethylenvinylacetat (EVAc); ein oder mehrere Ionomere; ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

**12.** Folie nach einem oder mehreren der vorherigen Ansprüche, **dadurch gekennzeichnet, dass** im Zuge der Extrusion in einer oder in mehreren Schichten folgende Stoffe zugegeben worden sind: Haftvermittler, funktionalisiertes Polymer wie z. B. EVOH, optische Aufheller, thermische Stabilisatoren, Gleitmittel, Antioxidantien, Oxygen scavenger, Abstandshalter (z. B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher.

**13.** Folie nach einem oder mehreren der vorherigen Ansprüche, **dadurch gekennzeichnet, dass** sie mit einem Non-Woven-Material, Textil, Nadelfilz, Synthesefasern oder Vlies kaschiert ist.

**14.** Schlauchlining-System für die grabenlose Kanalsanierung mittels Schlauchlining-Verfahren, umfassend einen Preliner oder eine Gleitfolie, vorzugsweise in Form einer Schlauchfolie nach einem oder mehreren der vorhergehenden Ansprüche, sowie einen Einlegeschlauch, der eine Schlauchinnenfolie in Form einer Mehrschichtfolie nach einem der vorhergehenden Ansprüche, eine als Schlauchfolie ausgebildete Außenfolie, die vorteilhafterweise UV-Strahlung absorbiert und/oder reflektiert und die zur Anlage an dem Preliner bzw. der Gleitfolie vorgesehen ist, sowie ein zwischen diesen beiden Schlauchfolien des Einlegeschlauchs angeordnetes und mit einem reaktiven Kunststoffharz getränktes Trägermaterial, z. B. Glasfasergewebe, Filze, Vliese, Textilien, das nach der Aushärtung das sanierte Kanalinnenrohr bildet, umfasst.

**15.** Verwendung einer schlauchförmigen Folie nach einem oder mehreren der vorhergehenden Ansprüche in der Rohrsanierung mittels Schlauchlining-Technik, wobei die schlauchförmige Folie als Preliner zur Anlage an der Innenwand eines zu sanierenden, unterirdisch verlegten Rohres, vorzugsweise eines Kanalrohres, ausgebildet ist, damit ein Einlegeschlauch mit einem aushärtbaren Trägermaterial gleitend durch den im Rohr verlegten Preliner gezogen oder in diesem invertiert werden kann.

**16.** Verwendung einer Folie nach einem oder mehreren der vorhergehenden Ansprüche als Gleitfolie, Stütz- oder Kalibrierschlauch oder als Schlauchinnenfolie eines Schlauchliners jeweils bei der grabenlosen Kanalsanierung.

**17.** Verwendung einer Folie nach einem oder mehreren der vorhergehenden Ansprüche als Verpackungsmaterial für Lebensmittel oder für den sog. Non-Food-Bereich, als Außenverkleidung, als außenliegende Abdeckung von Gebäudeteilen, als Bag-in-Box-Folie, als Membranfolie, als Folie für Sicherheitsgläser, Solarmodule oder Airbags, als Klebefolie, Tape oder Band, für die Kabelummantelung, in Schutzanzügen, bei Textilien und Bekleidungen, als Dekorfolie bei Laminaten für Holz-, Naturfaser- und Kunststoffverbundwerkstoffe, als Trenn- und Schutzfolie im Prepreg-Bereich (preimpregnated fibers, vorimprägnierte Fasern), als Schutzfolie, für Schilder sowie Anzeigetafeln, für medizinische Anwendungen wie Pflaster, für Hygieneartikel wie Windeln, für Displays oder als Isoliermaterial.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1145847 A1

**In der Beschreibung aufgeführte Nicht-Patentliteratur**

- **VON STEPHEN C. LAPIN.** Electron Beam Technology for Converting Applications. *Radtech Report,* 2009, vol. 23 (5), 44-47